(19) Europäisches Patentamt
European Patent Office
Office européen des brevets

(11) EP 3 591 425 A1

(12) EUROPEAN PATENT APPLICATION

(43) Date of publication:
**08.01.2020 Bulletin 2020/02**

(21) Application number: **19183652.7**

(22) Date of filing: **01.07.2019**

(51) Int Cl.:
***G01S 7/481*** *(2006.01)* ***G01S 7/499*** *(2006.01)*
***G01S 17/10*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2018 US 201816025499**

(71) Applicant: **STMicroelectronics Ltd**
**42507 OT Netanya (IL)**

(72) Inventors:
- **AMOR, Guy**
**70800 Gan-Yavne OT (IL)**
- **PHILIPP, Tzvi**
**99591 Bet Shemesh OT (IL)**
- **ROTH, Elan**
**6964304 Tel Aviv OT (IL)**

(74) Representative: **Studio Torta S.p.A.**
**Via Viotti, 9**
**10121 Torino (IT)**

# (54) LASER RANGING SYSTEM UTILIZING SENSOR IN SAME OPTICAL PATH AS EMITTING LASER

(57) A laser ranging system (5) includes a light source (32, 34) emitting a beam (31) of collimated light. A beam splitter (12) polarizes the beam with a first type of linear polarization. A wave plate (14) receives the beam from the beam splitter (12) and polarizes the beam with a circular polarization. A movable mirror (16) scans the beam across a target (22), receives a return beam (17) from the target, and reflects the return beam toward the wave plate (14). The wave plate polarizes the return beam with a second type of linear polarization. The beam splitter (12) receives the return beam (23) from the wave plate (14). A detector (20) detects arrival of the return beam from the beam splitter (12). A circuit (18) determines a distance to the target as a function of a time interval between emission of the beam (31) of collimated light and arrival of the return beam (23).

5
32
Near-IR Laser
18
TOF Circuit
40
11
Near-IR Reference Detector
19
31
36
13
P-Polarized
12
14
34
Optics
31
P-Polarization Filter
13
P-Polarized
Polarized Beam Splitter
P-Polarized
13
Quarter Wave Plate
23
S-Polarized
C-Polarized
48
23
27
17
20
Near-IR Detector
24
S-Polarized
Bandpass Filter
46
S-Polarized
24
S-Polarized
S Polarization Filter
C-Polarized
MEMS Mirror
16
73
17
76
27
Single Pixel 68
22
Field Of View
73
17
76
27
73
Single Pixel 69
Laser Beam
Return Beam
73 – Sunlight that will not reach Near-IR Detector
76 – Sunlight that will reach Near-IR Detector
FIG. 1

EP 3 591 425 A1

## Description

The present invention is related to the field of laser ranging system, usable in light detection and ranging (LIDAR) systems, and in particular, to a LIDAR system utilizing a sensor, for receiving laser beams reflected off of and returning a from a target, in the same optical path as the laser that emitted the laser beams, so as to increase signal to noise ratio.

LIDAR (light detection and ranging) is a surveying technique that measures distance to a target within a field of view by illuminating the target with a laser beam, measuring the laser beam as reflected back from the target with a sensor (referred to herein as the return beam), and determining the elapsed time (referred to herein as a return time) between the transmission of laser beam toward the target and receipt of the return beam. From the difference in these return times, when different targets within the field of view are illuminated with the laser beam, a point cloud representing a digital three dimensional representation of the field of view can be constructed.

LIDAR is commonly used to make high-resolution maps, with applications in geodesy, geomatics, archaeology, geography, geology, geomorphology, seismology, forestry, atmospheric physics, laser guidance, airborne laser swath mapping (ALSM), and laser altimetry. LIDAR technology is also used in control and navigation for some autonomous vehicles, or in advanced driver assistance systems in some vehicles.

While conventional LIDAR systems are especially useful in the above applications, they do suffer drawbacks when used during the day. Such LIDAR systems utilize lasers operating in a near-infrared spectrum ("near IR") due to limitations of the sensors used. Unfortunately, sunlight also includes near IR spectrum light, which means that when the return beam is collected into the detector during the day, such as by a lens, sunlight in the near IR spectrum is also collected. This reduces the signal to noise ratio of the resulting detection, degrading the accuracy of these LIDAR systems.

Therefore, further development into LIDAR systems is needed.

Accordingly, the present invention provides a laser ranging system and a method for measuring a distance to a target within a field of view, as defined in the appended claims.

For a better understanding of the present invention, embodiments thereof are now described, purely by way of non-limiting example, with reference to the attached drawings, wherein:

FIG. 1 is a detailed block diagram of a LIDAR system in accordance with an embodiment of the invention.

FIG. 2 is a block diagram of another embodiment of a LIDAR system in accordance with the present invention.

As an initial matter, since polarization of collimated light beams will be discussed with reference to the techniques and devices disclosed herein, polarization itself will first be briefly discussed.

Collimated light is light whose rays are parallel, and therefore will spread minimally as the light propagates. A laser beam focused by a collimation lens is an example of collimated light.

Light, collimated or not, is a transverse electromagnetic wave. This namesake arises because light is a wave comprised of a coupled oscillating electric field and magnetic field which are perpendicular to one another. By convention, the "polarization" of an electromagnetic wave (such as light) refers to the direction of the electric field. The polarizations that will be referred to herein are linear polarizations and circular polarization.

In linear polarizations, the electric field and magnetic field oscillate in a single direction. The two linear polarization states that will be referenced herein are referred to as p-polarization and s-polarization. P-polarized (also referred to as parallel polarized) light has an electric field polarized parallel to the plane of incidence (the plane which contains the surface normal and the propagation vector of the incoming light wave), while s-polarized (also referred to sigma polarized) light is perpendicular to this plane.

In circular polarizations, the electric field and magnetic field rotate at a constant rate in a plane as the light wave travels. The rotation can have two possible directions; if the electric field and magnetic field rotate in a right hand sense with respect to the direction of light wave travel, it is called right circular polarization, or, if the electric field and magnetic field rotate in a left hand sense, it is called left circular polarization.

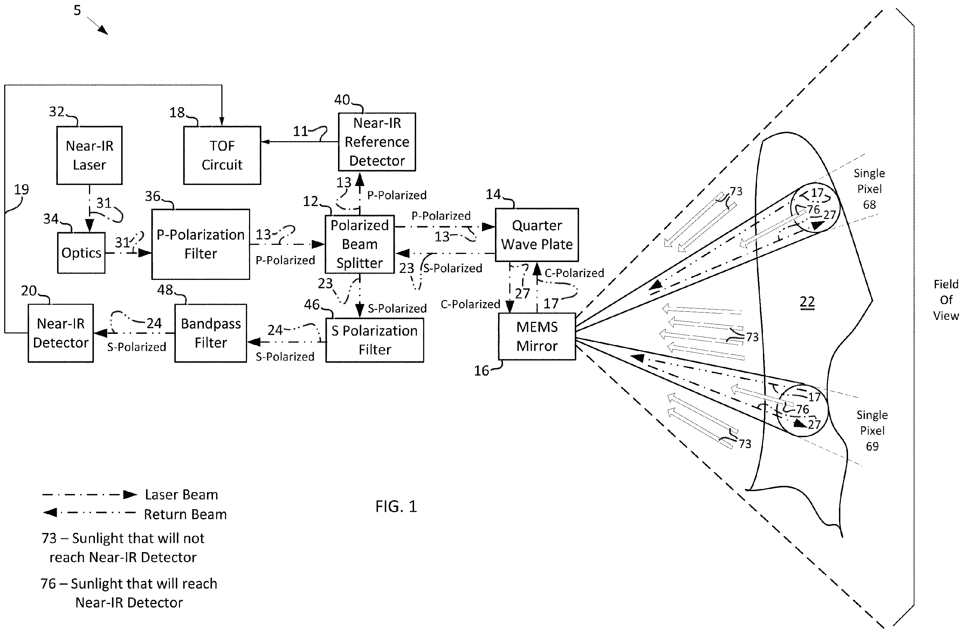

With a proper foundation laid for the understanding of polarized beams of collimated light, an embodiment of a laser ranging system 5 is now described with reference to FIG. 1. The laser ranging system 5 may be used in light detection and ranging (LIDAR) systems, or in other systems as desired. The laser ranging system 5 includes a laser 32 that is configured to lase in a pulsed fashion, producing laser beam pulses (shown as laser beam 31) in the near-infrared spectrum (having a wavelength in the range of 780 nm to 2500 nm).

The laser beam 31 is passed to an optics module 34, which focuses the laser beam 31, and passes the laser beam 31 to a p-polarization filter 36. The p-polarization filter 36 (being of a reflective, dichroic, or birefringement type) polarizes the laser beam 31 into a p-polarized laser beam 13. The p-polarized laser beam 13 is passed to a polarized beam splitter 12, which passes the p-polarized laser beam 13 to a quarter wave plate 14. The polarized beam splitter 12 also passes a small fraction (approximately 3% to 5%) of the p-polarized laser beam 13 to the reference detector 40 (which detects light in the near-infrared spectrum), which generates a beam generation signal 11 when it is impinged upon by photons of the p-polarized laser beam 13.

The quarter wave plate 14 changes the p-polarization of the p-polarized laser beam 13 to a circular polarization (either left hand or right hand) by retarding or delaying the electric field or magnetic field with respect to its orthogonal component, thereby producing a circularly polarized laser beam 27.

The now circularly polarized laser beam 27 is passed to a movable mirror, here, the microelectromechanical (MEMS) mirror 16. The MEMS mirror 16 oscillates or is deflected at a rotational speed sufficient to permit completion one full oscillation or deflection cycle in less than one second. Typically, the MEMS mirror 16 oscillates along its fast axis at a frequency of about 1 kHz to 7 kHz depending on the application and detection range of the system, while it oscillates along its short axis at a frequency of about 60 Hz to 120 Hz. The MEMS mirror 16 oscillates or is deflected according to a desired scan pattern, and scans the laser beam 27 in a one dimensional or two dimensional pattern across a field of view encompassing a target 22. When the laser beam 27 impinges on the target 22, it reflects off the target 22 and back toward the MEMS mirror 16 as return beam 17 (which is also circularly polarized). Two separate instances of the laser beam 27 impinging on the target 22 and the return beam 17 that reflects off the target 22 and back to the MEMS mirror 16 are shown in FIG. 1.

The MEMS mirror 16 reflects the return beam 17 back to the quarter wave plate 14, which changes the polarization of the return beam from circular to s-polarized to produce s-polarized return beam 23. The S-polarized return beam 23 is sent to the polarized beam splitter 12, which directs the S-polarized return beam 23 to the s-polarization filter 46. The s-polarization filter 46 and a cascade-connected bandpass filter 48, reduce non s-polarized noise, and thus output s-polarized laser beam 24 to the detector 20 (which detects in the near-infrared spectrum). The detector 20 detects when it is impinged upon by photons of the s-polarized laser beam 24, and asserts a detection signal 19 to indicate such.

A time of flight calculation circuit 18 receives the beam generation signal 11 at the time when the p-polarized laser beam 13 is generated, and uses timing circuitry to determine the elapsed time between an assertion of the beam generation signal 11 and an assertion of the detection signal 19. Since the speed of light is constant, the distance to the target 22 can thus be calculated from this elapsed time. Mathematically, this can be represented as $d = \frac{c*\Delta T}{2}$, where d is the distance to the target, c is the speed of light, and $\Delta T$ represents the elapsed time.

Since the speed of light is much greater than the rotational velocity of the MEMS mirror 16 (in fact, the speed of light is so many orders of magnitude greater than the rotational speed of the MEMS mirror 16 that the speed of the MEMS mirror 16 can be considered to be zero when compared to the speed of light), the laser beam 27 has time to travel to the target 22 and reflect off the target 22 and back onto the MEMS mirror 16 before the MEMS mirror 16 has changed position by an appreciable amount. Therefore, the MEMS mirror 16 is in a substantially same orientation when receiving the return beam 17 from the target 22 as when reflecting the laser beam 27 onto the target 22, enabling the same MEMS mirror 16 to reflect the return beam 17 resulting from the laser beam 27 back along the same path as the laser beam 27 traveled in the laser ranging system 5, ultimately onto the detector 20 as the s-polarized laser beam 24.

As can be appreciated, the light (both the return beam 17 as well as ambient light 76, such as sunlight) received by the MEMS mirror 16 from the target 22 are within a narrow cone which can be considered to provide a single "pixel" 68 of data, but no other ambient light 73 from the field of view will be received. Therefore, while the detector 20 will ultimately receive the ambient light 76 as well as the return beam 17, due to the use of the same MEMS mirror 16 to reflect both the laser beam 27 onto the target 22 as well as reflect the return beam 17 back toward the detector 20, the amount of ambient light received is drastically reduced as compared to conventional laser ranging systems which would also receive the ambient light 73 in addition to the ambient light 76. This substantially increases the signal to noise ratio, enabling use of the laser ranging system 5 in sunlight with acceptable performance.

In the example shown in FIG. 1, as stated, the laser beam 13 is p-polarized and laser beams 23 and 24 are s-polarized. However, it should be appreciated that, instead, the laser beam 13 may be s-polarized while the laser beams 23 and 24 are p-polarized.

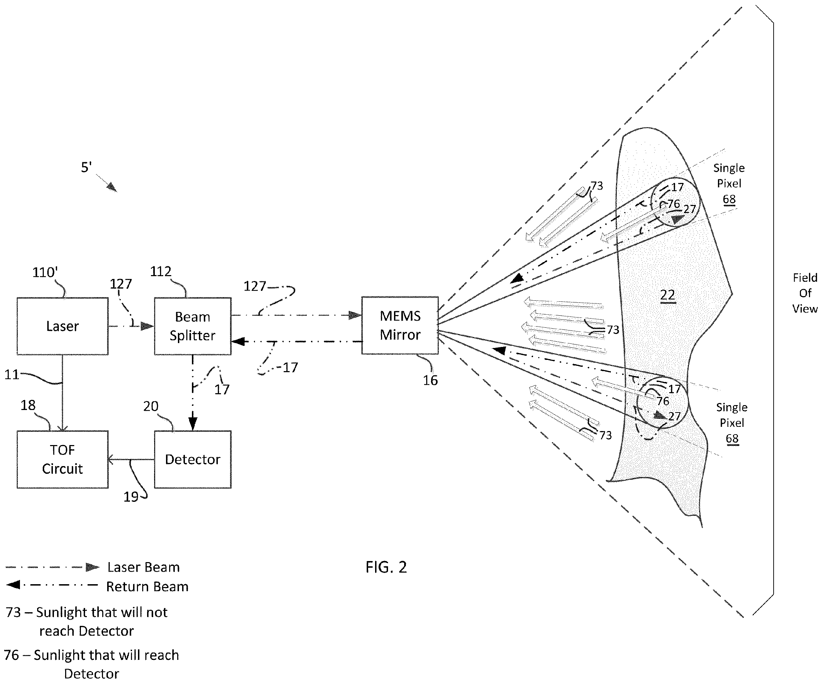

A simpler version of a laser ranging system 5' is now described with reference to FIG. 2. Here, a laser generator 110 generates a beam of laser light 127, which is directed onto a beam splitter 112. The beam splitter 112 receives the beam of laser light 127 from the laser 110, and directs the beam of laser light onto the MEMS mirror 16.

The MEMS mirror 16 oscillates or is deflected according to a desired scan pattern, and scans the laser beam 127 across a field of view encompassing a target 22. When the laser beam 127 impinges on the target 22, it reflects off the target 22 and back toward the MEMS mirror 16 as return beam 17. Two separate instances of the laser beam 127 impinging on the target 22 and the return beam 17 that reflects off the target 22 and back to the MEMS mirror 16 are shown in FIG. 2.

The MEMS mirror 16 reflects the return beam 17 back toward the beam splitter 112, which passes the return beam to the detector 20. The detector 20 asserts a detection signal 19 when the return beam is detected. A time of flight calculation circuit 18 receives an assertion of a beam generation signal 11 from laser 110 at the time when the laser beam 127 is generated, and uses timing circuitry to determine the elapsed time between an assertion of the beam generation signal 11 and an assertion of the detection signal 19. The distance to the target 22 is calculated from this elapsed time.

The light (both the return beam 17 as well as ambient light 76, such as sunlight) received by the MEMS mirror 16 from the target 22 are within a narrow cone which can be considered to provide a single "pixel" 68 of data, but no other ambient light 73 from the field of view will be received. Therefore, while the detector 20 will ultimately receive the ambient light 76 as well as the return beam 17, due to the use of the same MEMS mirror 16 to reflect both the laser beam 127 onto the target 22 as well as reflect the return beam 17 back toward the detector 20, the amount of ambient light received is drastically reduced as compared to conventional laser ranging systems which would also receive the ambient light 73 in addition to ambient light 76.

While the subject matter discussed herein is susceptible to various modifications and alternative constructions, certain illustrated embodiments thereof are shown in the drawings and have been described above in detail. It should be understood, however, that modifications may be made to the laser ranging system and method described and illustrated herein, without thereby departing from the scope of the present invention, as defined in the attached claims .

**Claims**

**1.** A laser ranging system, comprising:

transmission hardware (32-36, 12-16; 110, 112, 16) configured to emit a beam of collimated light (31, 27; 127) along a transmission path toward a target (22);
reception hardware (12-16; 112, 16), configured to receive a return beam (17) from the target along a same transmission path as the transmission path, such that only a cone of light about the transmission path of the transmission hardware is received by the reception hardware;
detection hardware (20) configured to receive the return beam (17) from the reception hardware, and to generate a detection signal (19) in response to receipt of the return beam;
a time of flight ranging circuit (18) configured to receive the detection signal and to determine a distance to the target as a function of a time interval between emission of the beam of collimated light by the transmission hardware and receipt of the return beam by the detection hardware.

**2.** The laser ranging system of claim 1, wherein the transmission hardware comprises:

a collimated light source (32, 34; 110) configured to emit the beam of collimated light (31; 127);
beam conditioning hardware (12, 14; 112) configured to receive the beam of collimated light (31; 127) from the collimated light source, condition the beam of collimated light, and output the beam of collimated light (27); and
a movable mirror (16) configured to receive the beam of collimated light from the beam conditioning hardware and to scan the beam of collimated light across the target.

**3.** The laser ranging system of claim 2, wherein the reception hardware comprises:

the movable mirror (16), wherein the movable mirror is configured to receive the return beam (17) from the target (22) and reflect the return beam toward the beam conditioning hardware (12, 14; 112);
the beam conditioning hardware (12, 14; 112), wherein the beam conditioning hardware is configured to receive the return beam (17) from the movable mirror (16), condition the return beam, and output the return beam to the detection hardware (20).

**4.** The laser ranging system of claim 2 or 3, wherein the beam conditioning hardware comprises:

a first beam conditioner (36) configured to receive the beam of collimated light (31) and to output the beam of collimated light (13) as having a first type of linear polarization (P);
a beam splitter (12) configured to receive the beam of collimated light (13) from the first beam conditioner (36) and to output the beam of collimated light (13); and
a second beam conditioner (14) configured to receive the beam of collimated light (13) from the beam splitter (12) and to output the beam of collimated light (27) as having a circular polarization.

**5.** The laser ranging system of claim 4, wherein the first beam conditioner comprises a polarization filter (36).

**6.** The laser ranging system of claim 4 or 5, wherein the second beam conditioner comprises a quarter wave plate (14).

**7.** The laser ranging system of any of claims 4-6, wherein the second beam conditioner (14) is also configured to receive the return beam from the movable mirror (16) and to output the return beam (23) as having a second type of linear polarization (S); wherein the beam splitter (12) is also configured to receive the return beam (23) from the second beam conditioner (14) and to output the return beam; and further comprising a third beam conditioner (46, 48) configured to receive the return beam from the beam splitter (12) and to attenuate the second type linear polarization noise therein.

**8.** The laser ranging system of claim 7, wherein the first type of linear polarization comprises a parallel-polarization.

**9.** The laser ranging system of claim 7 or 8, wherein the second type of linear polarization comprises a sigma-polarization.

**10.** The laser ranging system of any of the preceding claims, wherein the movable mirror (16) comprises a microelectromechanical mirror.

**11.** The laser ranging system of any of preceding claims, wherein the transmission hardware comprises a laser (32) emitting a beam of collimated light in the near infrared spectrum (31), and optics (34) for focusing the beam of collimated light.

**12.** The laser ranging system of any of claims 1-11, wherein the detection hardware (20) comprises at least one photodetector detecting incoming photons in the near infrared spectrum.

**13.** A method for measuring a distance to a target within a field of view, the method comprising:

emitting a beam of collimated light along a transmission path toward the target;
receiving a return beam from the target along the transmission path, such that only a cone of light about the transmission path is received;
generating a detection signal in response to receipt of the return beam; and
determining a distance to the target as a function of a time interval between emission of the beam of collimated light and receipt of the return beam.

**14.** The method of claim 13, wherein the emitting the beam of collimated light comprises:

causing a laser to lase, thereby producing a laser beam;
polarizing the laser beam to a first linear polarization type;
polarizing the laser beam to a circular polarization;
emitting the laser beam with the circular polarization as the beam of collimated light.

**15.** The method of claim 14, wherein receiving the return beam comprises:
changing the polarization of the return beam from a circular polarization to a second linear polarization type, prior to generating the detection signal.

**16.** The method any of claims 13-15, comprising:

driving an oscillating mirror to oscillate between first and second rotational limits at an oscillation rate; and
directing the laser beam to impinge on the oscillating mirror, thereby reflecting the laser beam to impinge upon a given point on the target;
wherein receiving a return beam comprises receiving, at the oscillating mirror, the return beam that has reflected from the given point on the target as a result of the impingement by the laser pulse on that given point, while the oscillating mirror is still in a substantially similar position as when it reflected the laser pulse toward the given point because the speed of light is substantially greater than an average rotational speed of the oscillating mirror when oscillating at the oscillation rate.

5
Near-IR Laser
32
TOF Circuit
18
Near-IR Reference Detector
40
11
19
31
34
Optics
31
P-Polarization Filter
36
13
P-Polarized
Polarized Beam Splitter
12
13
P-Polarized
P-Polarized
13
Quarter Wave Plate
14
23
S-Polarized
C-Polarized
C-Polarized
27
17
MEMS Mirror
16
23
S-Polarized
S Polarization Filter
46
24
S-Polarized
Bandpass Filter
48
24
S-Polarized
Near-IR Detector
20
73
17
76
27
Single Pixel 68
22
73
17
76
27
Single Pixel 69
73
Field Of View
Laser Beam
Return Beam
73 – Sunlight that will not reach Near-IR Detector
76 – Sunlight that will reach Near-IR Detector

FIG. 1

5'
110'
127
112
127
Laser
Beam
Splitter
MEMS
Mirror
11
17
17
16
18
20
TOF
Circuit
Detector
19
73
17
76
27
Single
Pixel
68
22
73
17
76
27
73
Single
Pixel
68
Field
Of
View
Laser Beam
Return Beam
73 – Sunlight that will not reach Detector
76 – Sunlight that will reach Detector


FIG. 2

Europäisches
Patentamt
European
Patent Office
Office européen
des brevets

# EUROPEAN SEARCH REPORT

Application Number
EP 19 18 3652

| DOCUMENTS CONSIDERED TO BE RELEVANT | | | |
|---|---|---|---|
| Category | Citation of document with indication, where appropriate, of relevant passages | Relevant to claim | CLASSIFICATION OF THE APPLICATION (IPC) |
| X | US 2014/078488 A1 (HOASHI YOSHIAKI [JP]) 20 March 2014 (2014-03-20) * paragraphs [0023] - [0035], [0042] - [0049]; figure 1 * | 1-16 | INV. G01S7/481 G01S7/499 G01S17/10 |
| X | JP 2014 059247 A (HITACHI LTD) 3 April 2014 (2014-04-03) * paragraphs [0020], [0045], [0047]; figure 1 * | 1-11 | |
| | | | TECHNICAL FIELDS SEARCHED (IPC) |
| | | | G01S |

The present search report has been drawn up for all claims

| Place of search | Date of completion of the search | Examiner |
|---|---|---|
| Munich | 13 November 2019 | Grübl, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 18 3652

This annex lists the patent family members relating to the patent documents cited in the above-mentioned European search report. The members are as contained in the European Patent Office EDP file on
The European Patent Office is in no way liable for these particulars which are merely given for the purpose of information.

13-11-2019

| Patent document cited in search report | Publication date | Patent family member(s) | Publication date |
|---|---|---|---|
| US 2014078488 A1 | 20-03-2014 | JP 5716719 B2 | 13-05-2015 |
| | | JP 2014059223 A | 03-04-2014 |
| | | US 2014078488 A1 | 20-03-2014 |
| JP 2014059247 A | 03-04-2014 | JP 2014059247 A | 03-04-2014 |
| | | WO 2014045655 A1 | 27-03-2014 |

EPO FORM P0459

For more details about this annex : see Official Journal of the European Patent Office, No. 12/82